# FASCICULE DE BREVET EUROPEEN

(11) **EP 2 064 955 B1**
(45) Date de publication et mention de la délivrance du brevet: **04.01.2012**
(21) Numéro de dépôt: 08169141.2
(22) Date de dépôt: 14.11.2008
(51) Int. Cl.: A22C 7/00, A22C 18/00

(54) **Chaîne de préparation de barres de produit alimentaire**
Produktionskette von Nahrungsmittelriegeln
Line for preparing bars of a food product

(30) Priorité: 27.11.2007 FR 0708295
(43) Date de publication de la demande: 03.06.2009
(73) Titulaire: Armor Inox, 56430 Mauron (FR)
(72) Inventeur: Cadoret, Bernard, 56430, Mauron (FR); Marquet, Olivier, 56430, Mauron (FR)
(74) Mandataire: Maillet, Alain

(56) Documents cités:
- EP-A- 0 744 129
- FR-A- 2 860 686
- US-A- 3 730 740
- US-A- 3 780 490
- US-B1- 7 069 840

## Description

La présente invention concerne une chaîne de préparation de barres de produit alimentaire. Elle trouve application dans le domaine du traitement industriel des produits alimentaires, du type viandes cuites et, en particulier, du type barres de jambon.

Avant d'être cuite, une barre de jambon doit être préparée. A cette fin, une chaîne de préparation d'une barre de jambon est mise en place en amont d'un poste de cuisson. La préparation consiste en un remplissage d'une alvéole en matière plastique avec des morceaux de viande. La chaîne de production consiste ainsi en un poste de fourniture de l'alvéole en matière plastique et un poste de remplissage de l'alvéole avec les morceaux de viande. L'alvéole, ainsi remplie, est ensuite fermée à un poste de scellage. L'alvéole, ainsi scellée, est transférée vers un poste de moulage où elle est déposée dans un moule de cuisson. Le moule de cuisson, ainsi rempli, est ensuite transféré vers le poste de cuisson.

Le poste de remplissage consiste généralement en une pluralité de sous-postes de remplissage. Dans chaque sous-poste, un opérateur prend un ou plusieurs morceaux de viande et remplit en partie et de manière ordonnée l'alvéole qui défile devant lui sur un dispositif de convoyage du type tapis convoyeur. Après que l'alvéole soit passée par tous les sous-postes de remplissage, elle est entièrement remplie.

Un tel procédé de remplissage mis en oeuvre sur une telle chaîne de préparation présente certains désavantages. Par exemple, sur la chaîne de préparation de l'état de la technique, les étapes s'effectuent les unes à la suite des autres, allongeant ainsi la chaîne de préparation augmentant l'encombrement autour de la chaîne de préparation. Par exemple, la cadence de cuisson est limitée par toutes les étapes précédentes. Ou encore, l'alimentation en barres de viande du poste de moulage doit se faire à rythme régulier et soutenu, ce qui impose des cadences de préparation élevées.

Les documents US-A-3,780,490 et US-A-3,730,740 divulguent des chaînes de préparation de produits alimentaires

Un objet de la présente invention est de proposer une chaîne de préparation de barres de produit alimentaire qui ne présente pas les inconvénients de l'état de la technique.

A cet effet, est proposé une chaîne de préparation de barres de produit alimentaire caractérisée en ce qu'elle comprend:
- au moins un poste d'alimentation en produit alimentaire,
- pour le ou chaque poste d'alimentation en produit alimentaire, un poste de fourniture d'un moule vide depuis une zone de stockage de moules vides,
- pour le ou chaque poste d'alimentation en produit alimentaire, un poste de remplissage dans lequel le moule vide ainsi fourni est rempli avec du produit alimentaire,
- pour le ou chaque poste d'alimentation en produit alimentaire, un poste de transfert du moule ainsi rempli vers un poste de chargement,
- un poste de présentation d'une alvéole vide prévu pour présenter une alvéole vide pour chaque moule rempli transféré depuis chaque poste de transfert,
- le poste de chargement comprenant des moyens pour positionner chaque moule rempli au-dessus de l'alvéole vide ainsi présenté et des moyens pour déposer le produit alimentaire du moule dans l'alvéole vide,
- un poste d'évacuation de l'alvéole ainsi remplie, et
- des moyens de transport du moule comprenant:
- un convoyeur de retour prévu pour transporter le moule vidé du poste de chargement vers la zone de stockage de moules vides,
- un premier convoyeur de transfert prévu pour recevoir le moule depuis la zone de stockage de moules vides,
- un convoyeur de remplissage prévu pour recevoir le moule depuis le premier convoyeur de transfert et le transporter à travers le poste de remplissage,
- un deuxième convoyeur de transfert prévu pour recevoir le moule rempli du convoyeur de remplissage, et
- un convoyeur de livraison prévu pour recevoir le moule rempli du deuxième convoyeur de transfert et le transporter jusqu'au poste de chargement.

Avantageusement, les moyens pour déposer le produit alimentaire sont constitués par le fond du moule qui s'ouvre.

Selon un mode de réalisation particulier, chaque moule comprend deux coques et deux axes sur lesquels chaque coque est mobile en rotation, et chaque axe est monté sur l'axe longitudinal du moule à l'une des extrémités du moule dans sa direction longitudinale.

Selon un autre mode de réalisation particulier, chaque moule comprend deux coques mobiles, chacune étant prévue pour se déplacer horizontalement en s'écartant de l'autre paroi coque.

Selon un autre mode de réalisation particulier, chaque moule comprend deux coques, chacune comprenant une première paroi formant les parois latérales du moule, une deuxième paroi formant la moitié du fond du moule, et des charnières montées entre la première paroi et la deuxième paroi, chaque deuxième paroi étant mobile en rotation autour de l'axe des charnières correspondantes.

Avantageusement, les moyens pour déposer le produit alimentaire comprennent un dispositif de poussée prévu pour venir pousser le produit alimentaire vers le bas lors de l'ouverture du fond.

Avantageusement, le dispositif de poussée comprend une plaque disposée au-dessus du moule et mobile verticalement entre une position haute dans laquelle la plaque n'appuie pas sur le produit alimentaire et une position basse dans laquelle la plaque pousse le produit alimentaire hors du moule.

Avantageusement, chaque poste de remplissage comprend au moins un sous-poste de distribution, et pour chaque sous-poste de distribution, au moins un sous-poste de remplissage.

Avantageusement, le ou chaque sous-poste de distribution comprend des moyens pour recevoir le produit alimentaire du poste d'alimentation en produit alimentaire, et, des moyens pour distribuer ledit produit alimentaire vers le ou chaque sous-poste de remplissage.

Avantageusement, le ou chaque sous-poste de remplissage comprend des moyens pour stocker le produit alimentaire provenant du sous-poste de distribution.

Avantageusement, le convoyeur de retour constitue la zone de stockage de moules vides.

Avantageusement, la zone de stockage de moules vides est surélevée par rapport au convoyeur de remplissage.

Avantageusement, le convoyeur de remplissage est surélevé par rapport au convoyeur de livraison.

Avantageusement, les moyens pour positionner le moule rempli au-dessus de l'alvéole vide sont constitués par un robot muni d'un bras manipulateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une vue schématique d'une chaîne de préparation selon l'invention,
la Fig. 2 est une vue dans la direction de la flèche II de la Fig. 1,
la Fig. 3 représente un poste d'alimentation en produit alimentaire vu en coupe selon la ligne III-III de la Fig. 1,
la Fig. 4 représente un sous-poste de distribution de produit alimentaire et un sous-poste de remplissage d'un moule, vus en coupe selon la ligne IV-IV de la Fig. 1, et
les Figs. 5, 6, 7 représentent différents modes de réalisation du moule.

L'invention va être plus particulièrement décrite dans le cadre de la préparation de barres de viande destinées à la fabrication de jambon, mais elle s'applique de la même manière à tous types de barres de produit alimentaire.

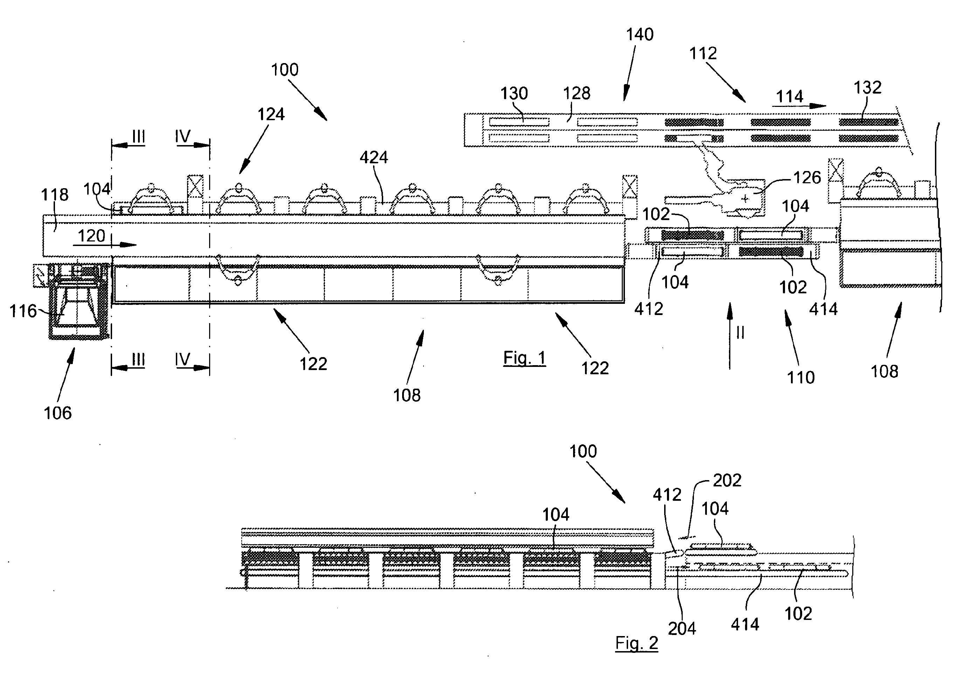

La Fig. 1 représente une vue de dessus d'une chaîne de préparation 100 de barres de viande. Comme cela est expliqué ci-après, les morceaux de viande sont rangés dans des moules 102 et 104. Par convention, un moule rempli de viande est référencé 102 et un moule vide, ou en cours de remplissage, est référencé 104.

La chaîne de préparation 100 est disposée entre un poste de préparation des morceaux de viande (non représenté) et un poste de scellage d'alvéole (non représenté). Les alvéoles scellées sont ensuite transportées vers un poste de mise en moule de cuisson puis vers un poste de cuisson.

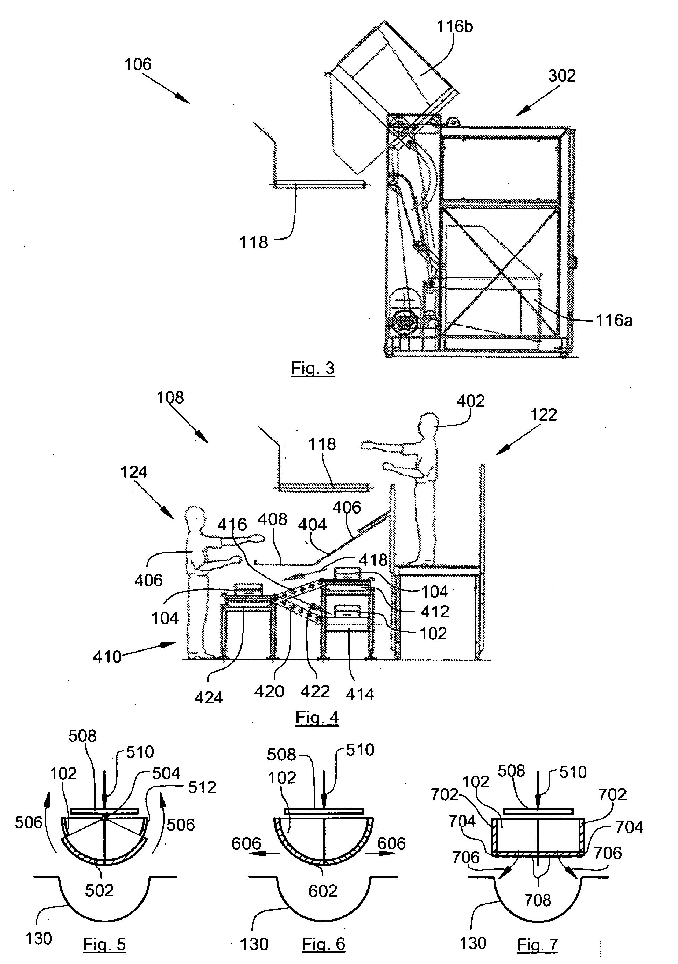

La chaîne de préparation 100 de barres de viande comprend:
- au moins un poste d'alimentation en produit alimentaire 106,
- pour le ou chaque poste d'alimentation en produit alimentaire 106, un poste de fourniture d'un moule vide 104 depuis une zone de stockage 412 de moules vides 104,
- pour le ou chaque poste d'alimentation en produit alimentaire 106, un poste de remplissage 108 dans lequel le moule vide 104 ainsi fourni est rempli avec du produit alimentaire,
- pour le ou chaque poste d'alimentation en produit alimentaire 106, un poste de transfert du moule 102 ainsi rempli vers un poste de chargement 110,
- un poste de présentation d'une alvéole vide 140 prévu pour présenter une alvéole vide 130 pour chaque moule rempli 102 transféré depuis chaque poste de transfert,
- le poste de chargement 110 comprenant des moyens pour positionner chaque moule 102 rempli au-dessus de l'alvéole vide 130 ainsi présenté et des moyens pour déposer le produit alimentaire du moule 102 dans l'alvéole vide 130,
- un poste d'évacuation 112 de l'alvéole ainsi remplie, et
- des moyens de transport 410 (voir Fig. 4) du moule 102, 104.

Une telle chaîne de préparation 100 permet de dissocier certaines étapes, en particulier le remplissage de l'alvéole et sa mise en moule de cuisson, et donc de réduire la longueur de la chaîne de préparation.

Comme cela est représenté sur la Fig. 1, la mise en place d'au moins deux postes d'alimentation en produit alimentaire 106, et donc d'autant de postes de fourniture de moule vide 104, de postes de remplissage 108 et de postes de transfert du moule 102 pour un même poste de chargement 110, permet d'augmenter le nombre de barres de viande produites pour le poste de scellage et les opérations suivantes, sans augmenter, pour les opérateurs, la cadence de préparation de ces barres.

L'alvéole vide est du type alvéole en plastique préformée.

Le poste d'alimentation en viande 106, qui est également représenté sur la Fig. 3, comprend dans le mode de réalisation de l'invention représenté ici, un bac 116 monté sur un dispositif de basculement 302. Le bac 116 est alimenté en viande depuis le poste de préparation des morceaux de viande, par exemple, par déversement de morceaux de viande dans le bac 116.

La Fig. 3 montre le bac 116 en position basse (référence 116a) correspondant à la position dans laquelle le bac 116 reçoit les morceaux de viande. La Fig. 3 montre également le bac 116 en position haute (référence 116b) correspondant à la position dans laquelle le bac 116 est basculé afm d'en évacuer les morceaux de viande.

Lorsque le poste de remplissage 108, disposé en aval du poste d'alimentation 106, doit être alimenté en viande, le dispositif de basculement 302 bascule le bac 116 au-dessus d'un convoyeur d'alimentation 118. Les morceaux de viande se déversent alors sur le convoyeur d'alimentation 118.

Les morceaux de viande ainsi déversés sur le convoyeur d'alimentation 118 se déplacent dans le sens de la flèche 120.

Dans le mode de réalisation de l'invention, deux postes de remplissage 108 ont été représentés, mais il est possible d'en disposer plus de deux autour d'un seul poste de chargement 110.

Chaque poste de remplissage 108, qui est également représenté sur la Fig. 4, comprend dans le mode de réalisation de l'invention représenté ici, au moins un sous-poste de distribution 122, et pour chaque sous-poste de distribution 122 au moins un sous-poste de remplissage 124.

Chaque sous-poste de distribution 122 comprend des moyens pour recevoir les morceaux de viande du poste d'alimentation en viande 106, et, des moyens pour distribuer les morceaux de viande vers chaque sous-poste de remplissage 124 qui dépendent de lui. Les moyens pour recevoir les morceaux de viande sont constitués ici par le convoyeur d'alimentation 118 et les moyens pour distribuer les morceaux de viande sont constitués ici par des auges de réception 404. Chaque auge de réception 404 prend ici la forme d'un plan incliné 406 qui se prolonge par un plateau de réception 408.

Chaque sous-poste de remplissage 124 comprend des moyens pour stocker les morceaux de viande provenant du sous-poste de distribution 122 qui sont constitués ici par les auges de réception 404 et plus particulièrement par les plateaux de réception 408.

Dans chaque sous-poste de distribution 122, un premier opérateur 402 répartit les morceaux de viande vers les différents sous-postes de remplissage 124. La répartition s'effectue par transfert des morceaux de viande qui transitent sur le convoyeur d'alimentation 118 vers l'auge de réception 404. La répartition des morceaux de viande entre les différents sous-postes de distribution 122 et les différents sous-postes de remplissage 124 s'effectue en fonction des modes de travail de chaque entreprise utilisant la chaîne de préparation 100.

Par exemple, selon un mode de réalisation particulier de l'invention, les morceaux de viande sont répartis en fonction de la nature des muscles à mettre en oeuvre en suivant la séquence d'assemblage de la barre de viande dans le moule 102.

L'auge de réception 404 est disposée sous le convoyeur d'alimentation 118, limitant ainsi les efforts nécessaires au transfert des morceaux de viande du convoyeur d'alimentation 118 vers l'auge de réception 404.

En vis-à-vis de chaque auge de réception 404, se tient un deuxième opérateur 406. Le deuxième opérateur 406 transfère les morceaux de viande du plateau de réception 408 dans un moule 104.

Les moules 102 et 104 sont transportés le long de la zone de stockage de moules vides 412, le long du poste de remplissage 108 et jusqu'au poste de transfert puis jusqu'au poste de chargement 110 par les moyens de transport 410.

Les moyens de transport 410 comprennent un convoyeur de retour 412, un convoyeur de livraison 414, un convoyeur de remplissage 424, un premier convoyeur de transfert 416 et un deuxième convoyeur de transfert 420.

Le convoyeur de retour 412, qui est également montré sur la Fig. 2, transporte les moules vides 104 du poste de chargement 110 vers la zone de stockage des moules vides 104. La zone de stockage de moules vides 104 est constituée dans le mode de réalisation de l'invention présenté ici par le convoyeur de retour 412.

Le convoyeur de retour 412 transporte les moules vides 104 jusqu'à l'aplomb du premier sous-poste de remplissage 124, c'est-à-dire celui qui se situe le plus en amont sur le poste de remplissage 108.

Au niveau du premier sous-poste de remplissage 124, le premier convoyeur de transfert 416 reçoit un moule vide 104 depuis la zone de stockage des moules vides. Par exemple, à cette fin, un mécanisme pousse le moule vide 104 sur le premier convoyeur de transfert 416.

Le convoyeur de remplissage 424 reçoit ensuite le moule 104 du premier convoyeur de transfert 416 et le transporte tout le long du poste de remplissage 108 en le faisant passer par les différents sous-postes de remplissage 124 dans le sens de la flèche 120.

Lorsque le moule 104 arrive au dernier sous-poste de remplissage 124, il est complété et vérifié en particulier en ce qui concerne le poids de viande mise en oeuvre. A cette fin, le dernier sous-poste de remplissage 124 est équipé d'une balance.

Le moule plein 102 est alors transféré du convoyeur de remplissage 424 vers le deuxième convoyeur de transfert 420.

Le convoyeur de livraison 414 reçoit ensuite le moule 102, après remplissage, du deuxième convoyeur de transfert 420 et le transporte jusqu'au poste de chargement 110. Le poste de transfert est ici constitué par le convoyeur de livraison 414.

Avantageusement, la zone de stockage de moules vides, c'est-à-dire ici le convoyeur de retour 412, est surélevée par rapport au convoyeur de remplissage 424. Le transfert s'effectue alors dans le sens de la flèche 418.

Avantageusement, le convoyeur de remplissage 424 est surélevé par rapport au convoyeur de livraison 414. Le transfert s'effectue alors dans le sens de la flèche 422.

Pour un gain de place, le convoyeur de retour 412 est au-dessus du convoyeur de livraison 414.

Pour chaque poste de remplissage 108, le convoyeur de retour 412 et le convoyeur de livraison 414 pénètrent dans le poste de chargement 110. Les moyens pour positionner chaque moule 102 rempli au-dessus d'une des alvéoles vides 130 sont constitués d'un robot 126 qui équipe le poste de chargement 110. Le moule plein 102 arrive au poste de chargement 110 par le convoyeur de livraison 414 en suivant la flèche 204 et le moule vide 104 repart du poste de chargement 110 par le convoyeur de retour 412 en suivant la flèche 202.

Le robot 126 comprend un bras manipulateur qui saisit chaque moule plein 102 arrivant sur le convoyeur de livraison 414.

Le poste d'évacuation 112 est prévu pour transporter les barres de viande vers le poste de mise en moule de cuisson puis vers le poste de cuisson.

Le poste de présentation 140 est alimenté en alvéoles vides 130 réalisées en matières plastiques par le poste de fourniture d'alvéole vide 130 qui est ici intégré au poste de présentation 140.

Ici le poste de présentation 140 et le poste d'évacuation 112 sont constitués par un même dispositif de transfert 128.

Chaque alvéole 130 est destinée à recevoir les morceaux de viande d'un moule 102. On comprendra que les alvéoles ou poches peuvent par exemple être réalisées sur une ligne de thermoformage.

A cette fin, le bras manipulateur est prévu pour disposer chaque moule plein 102 au-dessus d'une alvéole vide 130 du dispositif de transfert 128. Le moule 102 est alors vidé et son contenu est déposé dans l'alvéole vide 130 disposée sous le moule 102.

Après remplissage de l'alvéole vide 130, l'alvéole remplie 132 est transportée vers le poste de scellage de l'alvéole puis vers le poste de mise en moule de cuisson et vers le poste de cuisson. Le déplacement des alvéoles 130 et 132 est représenté par la flèche 114.

Comme cela est mieux vu sur la Fig. 2, le robot 126 saisit un moule plein 102 sur le convoyeur de livraison 414 et, après vidage du moule 102, repose le moule vide 104 sur le convoyeur de retour 412.

Pour assurer que, lors du vidage du moule 102, chaque morceau de viande conserve sensiblement la position dans laquelle il a été mis dans le moule 102, le vidage s'effectue, de préférence, par le fond du moule 102. C'est-à-dire que le fond du moule 102 s'ouvre pour libérer les morceaux de viande que le moule 102 contient. A cette fin, les moyens pour vider les morceaux de viande du moule 102 sont constitués par le fond du moule 102 qui s'ouvre.

Les Fig. 5 à 7 représentent des modes de réalisation particuliers de l'invention montrant différentes solutions permettant d'ouvrir le fond du moule 102. Dans la suite de la description, le terme "longitudinal" se rapporte à la direction parallèle à la plus grande longueur du moule 102, c'est-à-dire ici la direction de déplacement des moules 102 et 104 sur la chaîne de préparation 100.

Sur la Fig. 5, le moule 102 est constitué de deux coques mobiles 502, d'un châssis fixe 512 et deux axes 504 sur lesquels les deux coques mobiles 502 sont montées libres en rotation. Chaque axe 504 est monté sur l'axe longitudinal du moule 102 à l'une des extrémités du moule 102 dans sa direction longitudinale. Le châssis 512 constitue un élément rigide en partie haute du moule 102. Chaque coque mobile 502 prend la forme du jambon à réaliser et prolonge le châssis 512 vers le bas. Ici, chaque coque 502 prend une forme de segment cylindrique qui prolonge la forme arrondie du châssis 512. Chaque coque 502 est mobile en rotation autour des deux axes 504.

Lorsque le moule 102 est au-dessus d'une alvéole vide 130, les deux coques 502 pivotent vers le haut autour des axes 504 comme cela est représenté par les flèches 506. L'ouverture des deux coques 502 permet l'évacuation des morceaux de viande par le fond du moule 102 ainsi ouvert.

Sur la Fig. 6, le moule 102 comprend deux coques 602 symétriques formant chacune la moitié du moule 102. Chaque coque 602 est montée mobile en translation et est prévue pour se déplacer horizontalement en s'écartant de l'autre coque 602 dans le sens des flèches 606, ouvrant ainsi le fond du moule 102. Lorsque le moule 102 est au-dessus d'une alvéole vide 130, les deux coques mobiles 602 s'écartent permettant l'évacuation des morceaux de viande par le fond du moule 102 ainsi ouvert.

Sur la Fig. 7, le moule 102 est constitué de deux coques 702. Chaque coque 702 comprenant une première paroi formant les parois latérales du moule 102 qui sont ici verticales, une deuxième paroi 708 formant la moitié du fond du moule 102, qui est ici horizontal, et des charnières 704 montées entre la première paroi et la deuxième paroi 708. En fonction de la longueur du moule 102, il peut y avoir une ou plusieurs charnières 704 réparties sur toute la longueur du moule 102 entre la première paroi et la deuxième paroi 708. Chaque deuxième paroi 708 est mobile en rotation autour de l'axe des charnières 704 correspondantes. L'axe des charnières 704 est parallèle à la direction longitudinale du moule 102.

Lorsque le moule 102 est au-dessus d'une poche vide 130, les deux deuxièmes parois 708 pivotent vers le bas autour de l'axe de leurs charnières 704 respectives comme cela est représenté par les flèches 706. L'ouverture des deux deuxièmes parois 708 permet l'évacuation des morceaux de viande par le fond du moule 102 ainsi ouvert.

Pour aider à l'évacuation des morceaux de viande, les moyens pour vider les morceaux de viande du moule 102 comprennent un dispositif de poussée 508 qui vient pousser les morceaux de viande vers le bas lors de l'ouverture du fond. Le dispositif de poussée 508 comprend ici une plaque 508 disposée au-dessus du moule 102 et mobile verticalement vers le bas (flèche 510) pour pousser les morceaux de viande lors de l'ouverture du fond et vers le haut pour reprendre sa position initiale avant la préhension d'un nouveau moule 102. C'est-à-dire que la plaque est mobile verticalement entre une position haute dans laquelle la plaque 508 n'appuie pas sur les morceaux de viande et une position basse dans laquelle la plaque 508 pousse les morceaux de viande vers le bas aidant ainsi à leur évacuation du moule 102.

Le procédé de préparation de barres de viande comprend:
- une étape d'alimentation en morceaux de viande d'au moins un poste de remplissage 108,
- pour chaque poste de remplissage 108, une étape de fourniture d'un moule vide 104 depuis la zone de stockage de moules vides,
- une étape de remplissage du moule vide 104 ainsi fourni avec les morceaux de viande ainsi alimentés,
- une étape de transfert du moule 102 ainsi rempli au poste de chargement 110,
- au poste de chargement 110, une étape de présentation d'une alvéole vide 130,
- au poste de chargement 110, une étape de positionnement du moule 102 ainsi transféré au-dessus de l'alvéole vide 130 ainsi livrée,
- une étape de dépose des morceaux de viande du moule 102 ainsi positionné dans l'alvéole 130,
- une étape d'évacuation de l'alvéole 132 ainsi remplie vers un poste de traitement ultérieur, comme par exemple, un poste de scellage puis un poste de mise en moule de cuisson et un poste de cuisson de l'alvéole 132 ainsi scellée, et
- une étape de retour du moule vide 104 vers la zone de stockage de moules vides.

Le procédé de préparation mis en place permet une augmentation du nombre de barres de viande partant pour le poste de cuisson, sans augmenter, pour les opérateurs, la cadence de préparation de ces barres. Il permet en outre la formation séquencée, ordonnée et contrôlée d'une barre de jambon compatible avec des cadences de production industrielle souhaitées.

Avantageusement, l'étape de dépose consiste en une étape d'ouverture du fond du moule 102.

L'étape d'alimentation en viande est réalisée par le poste d'alimentation en viande 106 disposé en aval de chaque poste de remplissage 108.

L'étape de fourniture d'un moule vide 104 est réalisée par les moyens de transport 410, et, en particulier, par le premier convoyeur de transfert 416 qui transfère le moule vide 104 de la zone de stockage de moules vides vers le convoyeur de remplissage 424.

L'étape de remplissage du moule 104 avec la viande est réalisée lors du passage du moule 104 dans le poste de remplissage 108 et les différents sous-postes de remplissage 124.

L'étape de livraison du moule plein 102 au poste de chargement 110 est réalisée par le poste de transfert, ici le convoyeur de livraison 414.

L'étape de fourniture d'une alvéole vide 130 est réalisée ici par le poste de présentation 140, et, en particulier, par le dispositif de transfert 128. Le poste de présentation 140 peut être une ligne de thermoformage.

L'étape de positionnement du moule 102 ainsi livré, au-dessus d'une alvéole vide 130, est réalisée par le robot 126.

L'étape de dépose des morceaux de viande du moule 102 dans l'alvéole 130 est réalisée par transfert des morceaux de viande du moule 102 dans l'alvéole 130, et, en particulier, par l'ouverture du fond du moule 102.

L'étape d'évacuation de l'alvéole 132 remplie vers le poste de traitement ultérieur est réalisée par le poste d'évacuation 112, et, en particulier, par le dispositif de transfert 128.

L'étape de retour du moule vide 104 vers la zone de stockage de moules vides est réalisée, après la dépose du moule vide 104 par le robot 126 sur le convoyeur de retour 412, par le convoyeur de retour 412.

Bien entendu, la présente invention n'est pas limitée aux exemples et modes de réalisation décrits et représentés, mais elle est susceptible de nombreuses variantes accessibles à l'homme de l'art.

Par exemple, pour améliorer la traçabilité des jambons, il peut être intéressant que chaque sous-poste de remplissage 124 comprenne un premier convoyeur de transfert 416 et un deuxième convoyeur de transfert 420. Ainsi, chaque opérateur travaille intégralement au montage individuel de sa barre dans le moule.

## Revendications

1. Chaîne de préparation (100) de barres de produit alimentaire **caractérisée en ce qu'**elle comprend:
- au moins un poste d'alimentation en produit alimentaire (106),
- pour le ou chaque poste d'alimentation en produit alimentaire (106), un poste de fourniture d'un moule vide (104) depuis une zone de stockage de moules vides (104),
- pour le ou chaque poste d'alimentation en produit alimentaire (106), un poste de remplissage (108) dans lequel le moule vide (104) ainsi fourni est rempli avec du produit alimentaire,
- pour le ou chaque poste d'alimentation en produit alimentaire (106), un poste de transfert du moule (102) ainsi rempli vers un poste de chargement (110),
- un poste de présentation d'une alvéole vide (140) prévu pour présenter une alvéole vide (130) pour chaque moule rempli (102) transféré depuis chaque poste de transfert,
- le poste de chargement (110) comprenant des moyens pour positionner chaque moule (102) rempli au-dessus de l'alvéole vide (130) ainsi présenté et des moyens pour déposer le produit alimentaire du moule (102) dans l'alvéole vide (130),
- un poste d'évacuation (112) de l'alvéole ainsi remplie, et
- des moyens de transport (410) du moule (102, 104) comprenant:
- un convoyeur de retour (412) prévu pour transporter le moule vidé (104) du poste de chargement (110) vers la zone de stockage de moules vides,
- un premier convoyeur de transfert (416) prévu pour recevoir le moule (104) depuis la zone de stockage de moules vides,
- un convoyeur de remplissage (424) prévu pour recevoir le moule (104) depuis le premier convoyeur de transfert (416) et le transporter à travers le poste de remplissage (108),
- un deuxième convoyeur de transfert (420) prévu pour recevoir le moule rempli (102) du convoyeur de remplissage (424), et
- un convoyeur de livraison (414) prévu pour recevoir le moule rempli (102) du deuxième convoyeur de transfert (420) et le transporter jusqu'au poste de chargement (110).

2. Chaîne de préparation (100) selon la revendication 1, **caractérisée en ce que** les moyens pour déposer le produit alimentaire sont constitués par le fond du moule (102) qui s'ouvre.

3. Chaîne de préparation (100) selon la revendication 2, **caractérisée en ce que** chaque moule (102) comprend deux coques (502) et deux axes (504) sur lesquels chaque coque (502) est mobile en rotation, et **en ce que** chaque axe (504) est monté sur l'axe longitudinal du moule (102) à l'une des extrémités du moule (102) dans sa direction longitudinale.

4. Chaîne de préparation (100) selon la revendication 2, **caractérisée en ce que** chaque moule (102) comprend deux coques (602) mobiles, chacune étant prévue pour se déplacer horizontalement en s'écartant de l'autre paroi coque (602).

5. Chaîne de préparation (100) selon la revendication 2, **caractérisée en ce que** chaque moule (102) comprend deux coques (702), chacune comprenant une première paroi formant les parois latérales du moule (102), une deuxième paroi (708) formant la moitié du fond du moule (102), et des charnières (704) montées entre la première paroi et la deuxième paroi (708), chaque deuxième paroi (708) étant mobile en rotation autour de l'axe des charnières (704) correspondantes.

6. Chaîne de préparation (100) selon l'une des revendications 2 à 5, **caractérisée en ce que** les moyens pour déposer le produit alimentaire comprennent un dispositif de poussée (508) prévu pour venir pousser le produit alimentaire vers le bas lors de l'ouverture du fond.

7. Chaîne de préparation (100) selon la revendication 6, **caractérisée en ce que** le dispositif de poussée (508) comprend une plaque (508) disposée au-dessus du moule (102) et mobile verticalement entre une position haute dans laquelle la plaque (508) n'appuie pas sur le produit alimentaire et une position basse dans laquelle la plaque (508) pousse le produit alimentaire hors du moule (102).

8. Chaîne de préparation (100) selon l'une des revendications 1 à 7, **caractérisée en ce que** chaque poste de remplissage (108) comprend au moins un sous-poste de distribution (122), et pour chaque sous-poste de distribution (122), au moins un sous-poste de remplissage (124).

9. Chaîne de préparation (100) selon la revendication 8, **caractérisée en ce que** le ou chaque sous-poste de distribution (122) comprend des moyens pour recevoir le produit alimentaire du poste d'alimentation en produit alimentaire (106), et, des moyens pour distribuer ledit produit alimentaire vers le ou chaque sous-poste de remplissage (124).

10. Chaîne de préparation (100) selon l'une des revendications 8 ou 9, **caractérisée en ce que** le ou chaque sous-poste de remplissage (124) comprend des moyens pour stocker le produit alimentaire provenant du sous-poste de distribution (122).

11. Chaîne de préparation (100) selon la revendication 1 à 10, **caractérisée en ce que** le convoyeur de retour (412) constitue la zone de stockage de moules vides.

12. Chaîne de préparation (100) selon l'une des revendications 1 à 11, **caractérisée en ce que** la zone de stockage de moules vides est surélevée par rapport au convoyeur de remplissage (424).

13. Chaîne de préparation (100) selon l'une des revendications 1 à 12, **caractérisée en ce que** le convoyeur de remplissage (424) est surélevé par rapport au convoyeur de livraison (414).

14. Chaîne de préparation (100) selon l'une des revendications 1 à 13, **caractérisée en ce que** les moyens pour positionner le moule (102) rempli au-dessus de l'alvéole vide (130) sont constitués par un robot (126) muni d'un bras manipulateur.

## Claims

1. Line for preparing (100) bars of a food product **characterised in that** it comprises:
- at least one food product supply unit (106),
- for the or each food product supply unit (106), a unit supplying an empty mould (104) from an empty mould (104) storage area,
- for the or each food product supply unit (106), a filling unit (108) in which the empty mould (104) thus supplied is filled with the food product,
- for the or each food product supply unit (106), a unit for transferring the mould (102) thus filled to a loading unit (110),
- a unit for presenting an empty cell (140) intended to present an empty cell (130) for each filled mould (102) transferred from each transfer unit,
- the loading unit (110) comprising means for positioning each filled mould (102) above the empty cell (130) thus presented and means for depositing the food product from the mould (102) into the empty cell (130),
- a unit for evacuating (112) the cell thus filled, and
- means for transporting (410) the mould (102, 104) comprising:
- a return conveyor (412) intended to transport the empty mould (104) from the loading unit (110) to the empty mould storage area,
- a first transfer conveyor (416) intended to accept the mould (104) from the empty mould storage area,
- a filling conveyor (424) intended to accept the mould (104) from the first transfer conveyor (416) and transport it across the filling unit (108),
- a second transfer conveyor (420) intended to accept the filled mould (102) from the filling conveyor (424), and
- a delivery conveyor (414) intended to accept the filled mould (102) from the second transfer conveyor (420) and transport it to the loading unit (110).

2. Preparation line (100) according to claim 1, **characterised in that** the means for depositing the food product are made up of the bottom of the mould (102), which opens.

3. Preparation line (100) according to claim 2, **characterised in that** each mould (102) comprises two shells (502) and two axes (504) on which each shell (502) rotates and **in that** each axis (504) is mounted on the longitudinal axis of the mould (102) at one of the ends of the mould (102) in its longitudinal direction.

4. Preparation line (100) according to claim 2, **characterised in that** each mould (102) comprises two moving shells (602), each being intended to move horizontally away from the other shell wall (602).

5. Preparation line (100) according to claim 2, **characterised in that** each mould (102) comprises two shells (702), each comprising a first wall forming the side walls of the mould (102), a second wall (708) forming half of the bottom of the mould (102) and hinges (704) mounted between the first wall and the second wall (708), each second wall (708) rotating about the axis of the corresponding hinges (704).

6. Preparation line (100) according to one of claims 2 to 5, **characterised in that** the means for depositing the food product comprise a thrust device (508) intended to push the food product downwards when the bottom is opened.

7. Preparation line (100) according to claim 6, **characterised in that** the thrust device (508) comprises a plate (508) positioned above the mould (102) and moving vertically between a high position in which the plate (508) does not rest on the food product and a low position in which the plate (508) pushes the food product out of the mould (102).

8. Preparation line (100) according to one of claims 1 to 7, **characterised in that** each filling unit (108) comprises at least one distribution sub-unit (122) and, for each distribution sub-unit (122), at least one filling sub-unit (124).

9. Preparation line (100) according to claim 8, **characterised in that** the or each distribution sub-assembly (122) comprises means for accepting the food product from the food product supply unit (106) and means for distributing said food product to the or each filling sub-assembly (124).

10. Preparation line (100) according to one of claims 8 or 9, **characterised in that** the or each filling sub-assembly (124) comprises means for storing the food product arriving from the distribution sub-assembly (122).

11. Preparation line (100) according to claims 1 to 10, **characterised in that** the return conveyor (412) constitutes the empty moulds storage area.

12. Preparation line (100) according to one of claims 1 to 11, **characterised in that** the empty mould storage area is raised with respect to the filling conveyor (424).

13. Preparation line (100) according to one of claims 1 to 12, **characterised in that** the filling conveyor (424) is raised with respect to the delivery conveyor (414).

14. Preparation line (100) according to one of claims 1 to 13, **characterised in that** the means for positioning the filled mould (102) above the empty cell (130) are made up of a robot (126) equipped with a manipulator arm.

## Patentansprüche

1. Produktionsstraße (100) für Nahrungsmittellaibe, **dadurch gekennzeichnet, dass** sie enthält:
- mindestens eine Station zum Zuführen eines Nahrungsmittelprodukts (106),
- für die bzw. jede Station zum Zuführen eines Nahrungsmittelprodukts (106) eine Station zum Bereitstellen einer leeren Form (104) aus einem Lagerbereich für leere Formen (104),
- für die bzw. jede Station zum Zuführen eines Nahrungsmittelprodukts (106) eine Station zum Befüllen (108), in der die so bereitgestellte leere Form (104) mit einem Nahrungsmittelprodukt gefüllt wird,
- für die bzw. jede Station zum Zuführen eines Nahrungsmittelprodukts (106) eine Station zum Weiterleiten der so gefüllten Form (102) zu einer Beladestation (110),
- eine Station zum Vorlegen einer leeren Hülle (140), die dazu vorgesehen ist, eine leere Hülle (130) für jede gefüllte Form (102) vorzulegen, die von jeder Weiterleitungsstation weitergeleitet wird,
- wobei die Beladestation (110) die Mittel zum Positionieren jeder gefüllten Form (102) über der so vorgelegten leeren Hülle (130) und Mittel zum Ablegen des Nahrungsmittelprodukts der Form (102) in der leeren Hülle (130) aufweist,
- eine Station zum Abtransport (112) der so gefüllten Hülle und
- Transportmittel (410) für die Form (102, 104), die enthalten:
- ein Rückführförderband (412), das dazu vorgesehen ist, die leere Form (104) von der Beladestation (110) zum Lagerbereich für leere Formen zu transportieren,
- ein erstes Transportförderband (416), das dazu vorgesehen ist, die Form (104) ab dem Lagerbereich für leere Formen aufzunehmen,
- ein Befüllförderband (424), das dazu vorgesehen ist, die Form (104) ab dem ersten Transportförderband (416) aufzunehmen und durch die Station zum Befüllen (108) zu transportieren,
- ein zweites Transportförderband (420), das dazu vorgesehen ist, die gefüllte Form (102) vom Befüllförderband (424) aufzunehmen, und
- ein Ablieferförderband (414), das dazu vorgesehen ist, die gefüllte Form (102) vom zweiten Transportförderband (429) aufzunehmen und bis zur Beladestation (110) zu transportieren.

2. Produktionsstraße (100) nach Anspruch 1, **dadurch gekennzeichnet, dass** die Mittel zum Ablegen des Nahrungsmittelprodukts durch den Boden der Form (102) gebildet sind, der sich öffnet.

3. Produktionsstraße (100) nach Anspruch 2, **dadurch gekennzeichnet, dass** jede Form (102) zwei Schalen (502) und zwei Achsen (504) umfasst, auf denen jede Schale (502) drehbar beweglich ist, und **dadurch**, dass jede Achse (504) auf der Längsachse der Form (102) an einem der Enden der Form (102) in ihrer Längsrichtung befestigt ist.

4. Produktionsstraße (100) nach Anspruch 2, **dadurch gekennzeichnet, dass** jede Form (102) zwei bewegliche Schalen (602) umfasst, wobei jede dazu vorgesehen ist, sich horizontal zu verschieben und sich dabei von der anderen Schalenwand (602) zu entfernen.

5. Produktionsstraße (100) nach Anspruch 2, **dadurch gekennzeichnet, dass** jede Form (102) zwei Schalen (702) umfasst, wobei jede eine erste Wand, die die Seitenwände der Form (102) bildet, eine zweite Wand (708), die die Hälfte des Bodens der Form (102) bildet, und Scharniere (704) umfasst, die zwischen der ersten Wand und der zweiten Wand (708) befestigt sind, wobei jede zweite Wand (708) um die entsprechenden Scharnierachsen (704) drehbar beweglich befestigt ist.

6. Produktionsstraße (100) nach einem der Ansprüche 2 bis 5, **dadurch gekennzeichnet, dass** die Mittel zum Ablegen des Nahrungsmittelprodukts eine Schiebevorrichtung (508) umfassen, die dazu vorgesehen ist, das Nahrungsmittelprodukt beim öffnen des Bodens nach unten zu schieben.

7. Produktionsstraße (100) nach Anspruch 6, **dadurch gekennzeichnet, dass** die Schiebevorrichtung (508) eine Platte (508) aufweist, die über der Form (102) angeordnet ist und zwischen einer oberen Position, in der die Platte (508) nicht auf dem Nahrungsmittelprodukt aufliegt, und einer unteren Position, in der die Platte (508) das Nahrungsmittelprodukt aus der Form (102) herausschiebt, vertikal beweglich ist.

8. Produktionsstraße (100) nach einem der Ansprüche 1 bis 7, **dadurch gekennzeichnet, dass** jede Station zum Befüllen (108) mindestens eine untergeordnet Verteilstation (122) und für jede untergeordnete Verteilstation (122) mindestens eine untergeordnete Station zum Befüllen (124) umfasst.

9. Produktionsstraße (100) nach Anspruch 8, **dadurch gekennzeichnet, dass** die bzw. jede untergeordnete Verteilstation (122) Mittel zum Aufnehmen des Nahrungsmittelprodukts von der Station zum Zuführen eines Nahrungsmittelprodukts (106) und Mittel zum Verteilen des Nahrungsmittelprodukts zu der bzw. jeder untergeordneten Station zum Befüllen (124) umfasst.

10. Produktionsstraße (100) nach einem der Ansprüche 8 oder 9, **dadurch gekennzeichnet, dass** die bzw. jede untergeordnete Station zum Befüllen (124) Mittel zum Lagern des Nahrungsmittelprodukts umfasst, das von der untergeordneten Verteilstation (122) kommt.

11. Produktionsstraße (100) nach Anspruch 1 bis 10, **dadurch gekennzeichnet, dass** das Rückführförderband (412) den Lagerbereich für leere Formen bildet.

12. Produktionsstraße (100) nach einem der Ansprüche 1 bis 11, **dadurch gekennzeichnet, dass** der Lagerbereich für leere Formen in Bezug auf das Befüllförderband (424) höher liegt.

13. Produktionsstraße (100) nach einem der Ansprüche 1 bis 12, **dadurch gekennzeichnet, dass** das Befüllförderband (424) in Bezug auf das Ablieferförderband (414) höher liegt.

14. Produktionsstraße (100) nach einem der Ansprüche 1 bis 13, **dadurch gekennzeichnet, dass** die Mittel zum Positionieren der gefüllten Form (102) über der leeren Hülle (130) von einem Roboter (126) gebildet werden, der mit einem Manipulatorarm ausgestattet ist.
